# FASCICULE DE BREVET EUROPEEN

(11) **EP 0 996 839 B1**
(45) Date de publication et mention de la délivrance du brevet: **19.09.2001**
(21) Numéro de dépôt: 98939712.0
(22) Date de dépôt: 20.07.1998
(51) Int. Cl.: F16L 33/20

(54) **DISPOSITIF DE CONNEXION ENTRE UN TUBE ET UN TUYAU SOUPLE ET PROCEDE POUR FABRIQUER UN TEL DISPOSITIF**
VERBINDUNG ZWISCHEN EINEM ROHR UND EINEM SCHLAUCH UND VERFAHREN ZUM HERSTELLEN EINER SOLCHEN VERBINDUNG
CONNECTION DEVICE BETWEEN A TUBE AND A FLEXIBLE PIPE AND METHOD FOR MAKING SAME

(30) Priorité: 21.07.1997 FR 9709211
(43) Date de publication de la demande: 03.05.2000
(73) Titulaire: Etablissements CAILLAU, 92134 Issy-les-Moulineaux (FR)
(72) Inventeur: ANDRE, Michel, F-41200 Romorantin-Lanthenay (FR); RIGOLLET, Nicolas, F-41200 Romorantin-Lanthenay (FR); DETABLE, Pascal, Villedieu, F-41130 Gièvres (FR)
(74) Mandataire: Intès, Didier Gérard André
(86) Numéro de dépôt international: FR9801580
(87) Numéro de publication internationale: WO9905443

(56) Documents cités:
- EP-A- 0 440 564
- EP-A- 0 627 592
- EP-A- 0 670 449
- DE-A- 3 914 645

## Description

La présente invention concerne un dispositif de connexion entre un tube et un tuyau souple, connu du EP-A-627592. Ce dispositif comprenant un embout, disposé à une extrémité du tuyau et présentant des premiers moyens de verrouillage susceptibles de coopérer avec des deuxièmes moyens de verrouillage qui équipent le tube dans une situation de raccordement dans laquelle une première des deux pièces constituées par le tube et par l'embout est emmanchée dans la deuxième de ces deux pièces, le dispositif comprenant, en outre, un joint d'étanchéité apte à étancher la liaison entre le tube et l'embout dans ladite situation de raccordement.

Par exemple, c'est le tube qui est emmanché dans l'embout et le joint d'étanchéité est disposé à l'intérieur de l'embout et coopère avec la face externe du tube.

On connaît des dispositifs de ce type dans lesquels le joint d'étanchéité est constitué par un élément annulaire rapporté, en général un joint torique en caoutchouc ou analogue. Ce joint doit être calé axialement puisqu'il faut éviter qu'il ne se déplace lors de l'emmanchement du tube dans l'embout. Par conséquent, il est nécessaire de doter la périphérie interne de cet embout d'un logement apte à recevoir le joint et à caler ce dernier, ce qui implique de doter la périphérie interne de l'embout d'une géométrie relativement complexe. En outre, le joint doit être mis en place dans son logement après l'assemblage des autres pièces du dispositif pour former l'embout. Cette mise en place est relativement délicate puisqu'elle doit être réalisée avec suffisamment de précision pour que l'on soit certain que le joint est correctement disposé dans son logement et, en tout état de cause, elle nécessite la réalisation d'une étape supplémentaire à l'issue de l'assemblage des pièces de l'embout.

On connaît en outre, par la demande de brevet français publiée sous le n° 2 717 883, un dispositif de connexion dans lequel le joint est "intégré" aux pièces de l'embout. Ainsi, cet embout comporte une bague externe qui présente une ouverture à travers laquelle on injecte de la matière plastique une fois que les différentes pièces constitutives de l'embout sont assemblées, pour réaliser le joint par surmoulage. Ce surmoulage est toutefois une opération délicate qui nécessite un équipement d'injection approprié. En tout état de cause, l'étape d'injection du joint constitue une étape supplémentaire à l'issue de l'assemblage des différentes pièces constitutives de l'embout.

La présente invention vise à remédier à ces inconvénients.

Ce but est atteint grâce au fait que l'embout comporte une première et une deuxième bague disposées l'une à la suite de l'autre sur une première des faces interne et externe du tuyau, un espace dit "espace d'étanchéité" étant ménagé entre lesdites bagues, la deuxième bague étant plus proche de l'extrémité du tuyau que la première, au fait que l'embout comporte, en outre, un corps tubulaire qui est disposé sur la deuxième desdites faces interne et externe du tuyau et qui s'étend au moins dans la région de cette deuxième face correspondant à la zone qu'occupe l'espace d'étanchéité sur la première face et au fait que le joint d'étanchéité est formé par un bourrelet du tuyau qui se trouve dans l'espace d'étanchéité.

Dans le cas d'un dispositif pour lequel le tube est emmanché dans l'embout, les première et deuxième bagues constituent des bagues internes qui sont disposées à l'intérieur du tuyau, tandis que le corps tubulaire est placé sur la face externe du tuyau. Dans ce cas, le bourrelet est formé en saillie radiale vers l'intérieur et est apte à coopérer avec la face externe du tube pour remplir sa fonction de joint d'étanchéité.

Grâce à ces dispositions, le joint d'étanchéité forme une partie intégrante du dispositif et n'est pas constitué par une pièce rapportée. Du fait de la nature du matériau qui constitue le tuyau, il s'agit en général de caoutchouc ou de matière thermoplastique apte au fluage, le bourrelet est suffisamment souple pour assurer l'étanchéité par coopération avec la périphérie externe du tube.

Avantageusement, les extrémités des première et deuxième bagues situées de part et d'autre de l'espace d'étanchéité présentent des moyens pour éviter de blesser le tuyau de part et d'autre du bourrelet.

Cette précaution permet d'éviter que le tuyau ne s'abîme ou ne se dégrade anormalement dans la région du bourrelet au cours de la durée de vie du dispositif de connexion, de sorte que l'on s'assure que le bourrelet continue d'assurer normalement sa fonction d'étanchéité.

Selon une disposition avantageuse, le dispositif comporte, en outre, une bague intermédiaire, disposée entre la première et la deuxième bague et un premier et un deuxième espace d'étanchéité, dans lesquels sont respectivement formés un premier et un deuxième bourrelet du tuyau, sont respectivement ménagés entre la première bague et la bague intermédiaire et entre ladite bague intermédiaire et la deuxième bague.

Avantageusement, l'un des éléments constitués par la deuxième bague et par le corps tubulaire se prolonge au-delà de l'extrémité du tuyau et porte les premiers moyens de verrouillage.

Ces premiers moyens de verrouillage peuvent par exemple comprendre un organe élastique de verrouillage tel qu'une bague élastiquement déformable qui est disposée dans le prolongement ainsi formé.

L'invention concerne également un procédé pour fabriquer un dispositif de connexion entre un tube et un tuyau souple, dans lequel on dispose un embout à une extrémité du tuyau souple et on équipe ledit embout de premiers moyens de verrouillage susceptibles, dans une situation de raccordement dans laquelle une première des deux pièces constituées par le tube et par l'embout est emmanchée dans la deuxième de ces deux pièces, de coopérer avec des deuxièmes moyens de verrouillage qui équipent le tube, procédé dans lequel on prévoit un joint d'étanchéité apte à étancher la liaison entre le tube et l'embout dans ladite situation de raccordement.

Un premier procédé de ce type connu pour fabriquer les dispositifs dans lesquels le tube est emmanché dans l'embout consiste à assembler les différentes pièces constitutives de l'embout à l'extrémité du tuyau en prenant la précaution de réaliser, sur la périphérie interne de l'embout, un logement apte à contenir le joint d'étanchéité, puis à disposer ce joint, en général constitué par un joint torique en caoutchouc ou analogue, à l'intérieur de ce logement. Le fait de devoir conformer le logement pour le joint complique évidemment la fabrication des pièces de l'embout et l'étape dans laquelle on dispose le joint dans cet embout constitue une étape supplémentaire.

L'invention vise à remédier à ces inconvénients.

Ce but est atteint grâce au fait que, pour disposer l'embout à l'extrémité du tuyau, on dispose une première et une deuxième bague sur une première des faces interne et externe du tuyau, au fait que l'on ménage un espace dit "espace d'étanchéité" entre ces bagues, au fait que l'on dispose un corps tubulaire sur la deuxième des faces interne et externe du tuyau en plaçant ce corps de manière qu'il s'étende au moins dans la région de cette deuxième face qui correspond à la zone qu'occupe l'espace d'étanchéité sur la première face, et au fait que l'on dote l'embout du joint d'étanchéité en formant, dans le tuyau, un bourrelet qui s'étend dans l'espace d'étanchéité.

De cette manière, le joint est réalisé et correctement mis en place lors de l'assemblage des bagues et du corps tubulaire sur le tuyau. La fabrication est ainsi simplifiée puisque l'on évite la nécessité de rapporter ou de fabriquer ultérieurement un joint d'étanchéité et qu'il n'est pas nécessaire de prévoir dans l'atelier de fabrication ni un lieu de stockage pour des pièces telles que des joints d'étanchéité rapportés, ni un dispositif d'injection pour le ou les joints.

Selon un mode de réalisation avantageux, pour former le bourrelet, on diminue le diamètre de ceux des éléments constitués par les première et deuxième bagues et par le corps tubulaire qui se trouvent sur la face externe du tuyau. Cette diminution du diamètre est avantageusement obtenue en réalisant une étape de rétreint.

Ainsi, si le dispositif est du type dans lequel le tube est emmanché dans l'embout, le corps tubulaire se trouve sur la surface extérieure du tuyau et on diminue le diamètre de ce corps tubulaire pour à la fois le fixer au tuyau et, dans le même temps, réaliser le bourrelet qui forme le joint d'étanchéité. Le rétreint constitue une manière particulièrement simple d'obtenir cette diminution du diamètre. Il faut noter que l'on peut alors réaliser le rétreint en maintenant à la fois le corps tubulaire et la deuxième bague qui se trouve vers l'extrémité du tuyau et en déplaçant l'outil de rétreint axialement dans le sens allant en s'éloignant de cette extrémité. Dans ce cas, on peut se contenter d'enfiler les deux bagues l'une après l'autre à l'intérieur du tuyau sans prendre garde à ménager un espace d'étanchéité entre ces deux bagues, et c'est le mouvement de rétreint qui aura tendance à éloigner la deuxième bague de la première et permettra d'obtenir l'espace d'étanchéité tout en formant dans cet espace le bourrelet qui forme le joint d'étanchéité.

Pour réaliser une connexion dans laquelle c'est l'embout qui est emmanché à l'intérieur du tube, on dispose le corps tubulaire à l'intérieur du tuyau et les deux bagues à l'extérieur de ce dernier. La diminution du diamètre, par exemple par rétreint, s'appliquera alors aux deux bagues qui se trouvent à l'extérieur du tuyau.

Pour former le bourrelet, on peut également choisir d'augmenter le diamètre de ceux des éléments constitués par les première et deuxième bagues et par le corps tubulaire qui se trouvent sur la face interne du tuyau.

Pour réaliser l'augmentation du diamètre, on insère un outil d'expansion à l'intérieur du tuyau, de telle sorte qu'il coopère soit avec le corps tubulaire si c'est ce dernier qui est placé dans le tuyau, soit avec les première et deuxième bagues si ce sont ces bagues qui sont placées dans le tuyau.

Il faut noter que cette augmentation du diamètre des éléments internes peut se combiner à la diminution du diamètre des éléments externes précédemment évoquée ou être réalisée en lieu et place de cette augmentation.

Selon un mode de réalisation avantageux, on dispose une bague intermédiaire entre les première et deuxième bagues, on ménage un premier et un deuxième espace d'étanchéité entre la première bague et la bague intermédiaire et, respectivement, entre ladite bague intermédiaire et la deuxième bague et on forme dans le tuyau un premier et un deuxième bourrelet qui s'étendent respectivement dans le premier et dans le deuxième espace d'étanchéité.

De cette manière, on réalise deux bourrelets qui forment deux joints d'étanchéité espacés axialement l'un de l'autre.

De manière avantageuse, on laisse dépasser au moins l'un des éléments constitués par la deuxième bague et par le corps tubulaire au-delà de l'extrémité du tuyau pour former un prolongement et on place les premiers moyens de verrouillage sur ce prolongement.

Il faut noter que l'invention permet de réaliser le joint soit à l'intérieur du tuyau, si les deux bagues sont disposées à l'intérieur du tuyau, soit à l'extérieur du tuyau si les deux bagues sont disposées sur le tuyau.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 montre, en coupe axiale pour sa partie supérieure et en vue extérieure pour sa partie inférieure, un tube et un dispositif conformes à l'invention avant leur assemblage en situation de raccordement,
- la figure 2 est une coupe selon la ligne II-II de la figure 1, et
- la figure 3 est une vue analogue à la figure 1 montrant un autre mode de réalisation de l'invention.

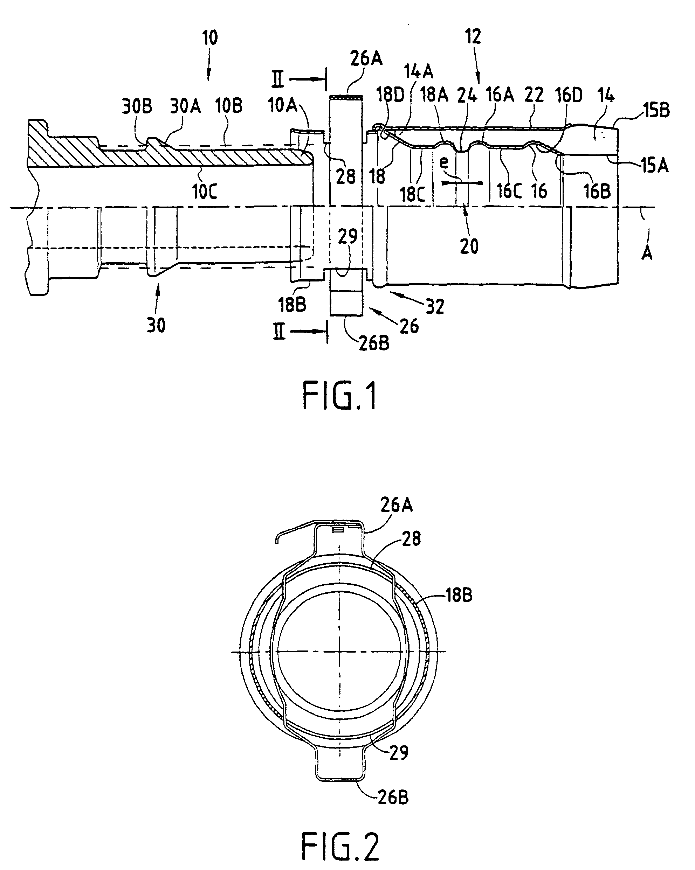

Le dispositif représenté sur la figure 1 est du type dans lequel le tube 10 est emmanché à l'intérieur de l'embout 12. Plus précisément, l'embout 12 est raccordé à l'extrémité d'un tuyau souple 14 par exemple réalisé en caoutchouc ou en matière thermoplastique apte au fluage. L'embout comporte une première et une deuxième bague, respectivement 16 et 18, qui sont disposées à l'intérieur du tuyau et qui coopèrent avec la face interne de ce dernier. Ces bagues sont disposées l'une à la suite de l'autre dans le tuyau, la bague 18 étant celle qui est la plus proche de l'extrémité libre 14A du tuyau. Comme l'indique la référence e indiquée sur la figure 1, les extrémités 16A de la bague 16 et 18A de la bague 18 qui se trouvent en regard l'une de l'autre sont écartées pour former un espace d'étanchéité 20. Un corps tubulaire 22 est disposé sur la face externe du tuyau 14. Dans l'exemple représenté, ce corps tubulaire s'étend sensiblement à partir de l'extrémité 16B de la bague 16 qui est opposée à son extrémité 16A jusqu'à l'extrémité libre 14A du tuyau. Il faut noter qu'il pourrait s'étendre sur une distance plus ou moins longue mais qu'il est au moins présent dans la région de la face externe 15B du tuyau qui "surplombe" l'espace d'étanchéité 20, bien que pas nécessairement exactement au droit de cet espace. Dans l'espace 20, le tuyau 14 forme un bourrelet 24 qui constitue un joint d'étanchéité apte à coopérer avec la périphérie externe 10B du tube 10 lorsque celui-ci est emmanché dans l'embout.

Dans l'exemple représenté, la deuxième bague interne 18 présente un prolongement 18B qui porte des premiers moyens de verrouillage constitués par un anneau de verrouillage 26 élastiquement déformable. A cet effet, comme on le voit mieux sur la figure 2, le prolongement 18B présente deux fentes transversales à l'axe A de la connexion, respectivement désignées par les références 28 et 29, à travers lesquelles passent deux extrémités, respectivement 26A et 26B, de l'anneau oblong de verrouillage 26. Cet anneau, qui est fermé sur lui-même, présente des dimensions diamétrales internes légèrement supérieures à la longueur des fentes 28 et 29 mesurées transversalement, de sorte que l'anneau est ainsi maintenu en place dans l'embout.

Le tube 10 présente, sur sa périphérie externe, un bourrelet 30 qui forme les deuxièmes moyens de verrouillage. Ce bourrelet présente une rampe 30A qui, lors de l'insertion du tube 10 dans l'embout, coopère avec l'anneau 26 pour le déformer élastiquement et permettre ainsi l'insertion du tube. Du côté opposé à cette rampe 30A, c'est-à-dire du côté opposé à l'extrémité libre 10A du tube, le bourrelet forme un épaulement 30B qui coopère avec l'anneau 26 pour maintenir le tube verrouillé dans l'embout.

L'anneau 26 est par exemple réalisé en acier à ressort et si l'on souhaite déverrouiller la connexion, il suffit d'appuyer sur les extrémités 26A et 26B de cet anneau pour augmenter son diamètre interne et permettre ainsi le dégagement de l'épaulement 30B puis le retrait du tube. Le tube est une pièce rigide, par exemple réalisée en métal ou en matériau plastique. A son extrémité (non représentée sur la figure 1) opposée à son extrémité 10A qui s'insère dans l'embout, le tube peut être raccordé à un tuyau souple, par exemple à l'aide d'un embout sapin ou par tout moyen approprié.

On notera que dans l'exemple représenté, l'anneau 26 est seulement disposé dans le prolongement 18A de la bague 18. De manière alternative, on pourrait imaginer que ce soit le corps tubulaire 22 qui soit prolongé au-delà de l'extrémité 14A du tuyau pour porter les premiers moyens de verrouillage, par exemple un anneau analogue à l'anneau 26. On pourrait également imaginer que la bague 18 et le corps 22 soient tous deux prolongés au-delà de l'extrémité 14A pour être raccordés l'un à l'autre et porter les premiers moyens de verrouillage. Toutefois, dans l'exemple représenté, le corps tubulaire 22 s'étend seulement sur une faible distance au-delà de l'extrémité libre 14A du tuyau, ce qui permet de le sertir sur une excroissance radiale de la bague 18 comme indiqué par la référence 32.

Comme on le verra dans la suite, ce sertissage n'est toutefois pas obligatoire.

On constate sur la figure 1 que les extrémités 16A et 18A des bagues 16 et 18 présentent, chacune, une déformation qui forme une surface annulaire s'étendant en creux par rapport au bourrelet 20. Cette déformation forme en fait une portion de surface torique. Grâce à ces dispositions, tout en évitant que les extrémités libres des bagues 16 et 18 situées de part et d'autre du bourrelet ne forment des excroissances radiales qui pourraient nuire à l'étanchéité, on fait en sorte que ces extrémités libres soient dirigées sensiblement tangentiellement par rapport aux côtés du bourrelet avec lesquels elles sont en contact, ce qui permet d'éviter de blesser le tuyau de part et d'autre de ce bourrelet.

Outre les déformations des extrémités 16A et 18A, les bagues 16 et 18 présentent des portions courantes cylindriques, respectivement désignées par les références 16C et 17C sur lesquelles leur diamètre est légèrement supérieur au diamètre externe du tube dans la région de ce dernier qui est situé entre son extrémité 10A et son renflement 30. Les bagues 16 et 18 peuvent présenter d'autres déformations, par exemple une surface concave 16D est également formée entre la portion de cylindre 16C et l'extrémité 16B de la bague 16 pour contribuer au maintien et au calage de l'extrémité du tuyau dans l'embout. Par ailleurs, une déformation 18D vers l'extérieur forme la transition entre la portion cylindrique 18C de la bague 18 et le prolongement 18B de cette dernière.

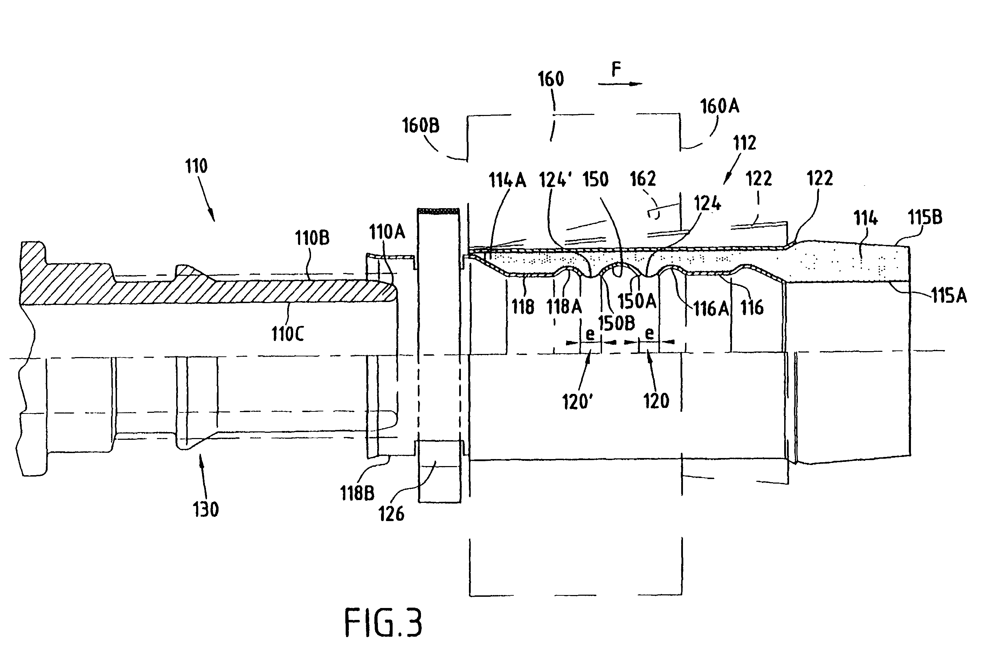

On décrit maintenant la figure 3, sur laquelle, pour désigner les éléments communs aux figures 1 et 3, on a utilisé les mêmes références que sur la figure 1 augmentées de 100. Le tube 110 a une conformation analogue à celle du tube 10 et la connexion de la figure 3 est également du type dans lequel c'est le tube qui est emmanché à l'intérieur de l'embout. Les bagues internes 116 et 118 de ce dernier ont globalement la même conformation que les bagues 16 et 18 de la figure 1. Toutefois, une bague intermédiaire 150 est disposée entre les extrémités 116A et 118A de ces bagues. Les bagues 116 et 118 sont toutefois disposées à légère distance de la bague 150, de sorte qu'un premier et un deuxième espace d'étanchéité, respectivement désignés par les références 120 et 120', sont respectivement ménagés entre la première bague 116 et la bague intermédiaire 150 et entre la bague intermédiaire 150 et la deuxième bague 118. Dans chacun de ces espaces d'étanchéité, le tuyau 114 forme un bourrelet, respectivement désignés par les références 124 et 124', qui forment deux joints d'étanchéité espacés axialement l'un de l'autre. Lorsque le tube 110 est emmanché dans l'embout 112, ces deux bourrelets 124 et 124' coopèrent avec la périphérie externe 110B du tube pour réaliser l'étanchéité.

On notera que la bague 150 est conformée de manière à éviter de blesser le tuyau. En effet, elle a la forme d'une portion de tore et forme une surface concave en retrait par rapport aux bourrelets 124 et 124', de sorte que ses extrémités 150A et 150B coopérant respectivement avec les bourrelets 124 et 124' sont sensiblement tangentes aux côtés correspondants de ces bourrelets.

Comme indiqué précédemment, l'invention s'applique également au cas d'un dispositif de connexion pour lequel le tube est disposé à l'extérieur de l'embout, puisque l'on peut disposer des éléments analogues au corps tubulaire 22 ou 122 à l'intérieur du tuyau 14 ou 114 et placer des bagues analogues aux bagues 16, 18 ou aux bagues 116, 150 et 118 à l'extérieur de ce tuyau en ménageant des espaces d'étanchéité dans lesquels on forme des bourrelets du tuyau pour réaliser des joints d'étanchéité qui, dans ce cas, seraient aptes à coopérer avec la face cylindrique interne 10C ou 110C du tube 10 ou 110.

Pour fabriquer les dispositifs de connexion représentés sur les figures 1 et 3, on place les bagues 16 et 18, respectivement les bagues 116, 150 et 118, à l'intérieur du tuyau 14, respectivement 114, et l'on place les corps tubulaires, respectivement 22 et 122, à l'extérieur de ces tuyaux. On forme ensuite le bourrelet 24 dans l'espace d'étanchéité 20 pour le tuyau 14 ou, respectivement, les bourrelets 124 et 124' dans les espaces d'étanchéité 120 et 120' pour le tuyau 114. Pour ce faire, plusieurs solutions sont possibles. La première consiste à diminuer le diamètre du corps tubulaire 22 ou 122, ce qui a pour effet, d'une part, de maintenir le tuyau en place dans l'embout 12 ou 112 et, d'autre part, d'occasionner un fluage de la matière qui constitue ce tuyau, cette matière ayant tendance à se déplacer dans le ou les espaces d'étanchéité pour former le ou les bourrelets.

Il est avantageux d'obtenir cette diminution du diamètre en réalisant une étape de rétreint. Ainsi, on a représenté en trait interrompu mixte sur la figure 3 une matrice de rétreint 160 qui est disposée autour du corps tubulaire 122. De manière connue en soi, cette matrice 160 présente une cavité interne 162 dont les dimensions radiales diminuent progressivement entre une première extrémité 160A et une deuxième extrémité 160B de la matrice. Par exemple, la cavité 162 peut être tronconique. Lorsque, comme c'est le cas sur la figure 3, l'anneau de verrouillage 126 forme un obstacle à la mise en place de la matrice 160 sur le corps tubulaire 122 par un déplacement axial relatif de ces deux pièces, on peut utiliser une matrice comprenant deux demi-coquilles qui sont assemblées autour du corps 122. Ensuite, à partir de la position représentée sur la figure 3, il suffit de maintenir le corps 122 en déplaçant la matrice 160 dans le sens de la flèche F allant de son extrémité 160B à son extrémité 160A pour rétreindre le corps 122 et l'amener ainsi de sa position représentée en trait mixte à sa position représentée en trait plein.

Il faut noter qu'il est tout à fait possible de disposer les bagues 116, 150 et 118 à l'intérieur du tuyau sans prendre garde à ménager les espaces d'étanchéité 120 et 120', par exemple en disposant la bague 150 en contact avec les bagues 116 et 118. Le mouvement de rétreint axial dans le sens F aura alors pour effet, la bague 118 étant maintenue, par exemple par son prolongement 118B, de déplacer tout d'abord l'ensemble constitué par les bagues 116 et 150 pour former l'espace d'étanchéité 120' puis, seulement la bague 116 pour former le deuxième espace d'étanchéité 120. L'essentiel est en effet que les bourrelets 124 et 124' se forment dans les espaces 120 et 120', mais le strict respect des cotes des longueurs e de ces espaces n'est pas obligatoire. Une fois le rétreint effectué, le corps tubulaire 122 est maintenu sur la surface externe 115B du tuyau 114 et ce dernier est pincé entre le corps 122 et les bagues 116, 150 et 118, ce qui évite tout risque d'arrachement axial. Dans ces conditions, il n'est pas toujours obligatoire de fixer le corps 122 à la bague 118 par un sertissage ou analogue.

Plutôt qu'un rétreint par déplacement axial de la matrice de rétreint 160, on pourrait choisir d'utiliser une matrice comprenant différents segments radiaux délimitant une cavité interne dont on pourrait faire varier le diamètre par un déplacement radial des différents segments, pour réaliser ainsi un rétreint radial.

En plaçant un outil d'expansion à l'intérieur de l'embout, on pourrait également réaliser une étape d'expansion en augmentant le diamètre des bagues 16 et 18 pour la connexion de la figure 1 ou le diamètre des bagues 116, 150 et 118 pour la connexion de la figure 3.

A titre d'exemple, on peut réaliser les bagues et les corps tubulaires dans un acier d'épaisseur variable entre 0,6 et 0,8 mm et utiliser un tuyau en caoutchouc dont l'épaisseur est de 4 à 5 mm, pour une dureté de l'ordre de 65 à 75 Shore A, par exemple voisine de 70 Shore A. Pour assembler les pièces constitutives de l'embout et réaliser dans le même temps le ou les bourrelets, on peut réaliser une étape de rétreint avec un taux de compression (c'est-à-dire la variation de l'épaisseur courante du caoutchouc dans la zone du rétreint) de 10 à 30 %.

La connexion peut être utilisée pour véhiculer un fluide de carburant, auquel cas la température de ce fluide varie relativement peu.

Elle peut également être utilisée pour véhiculer un fluide dont la température varie fortement, par exemple un fluide de refroidissement. Dans ce cas, au cours de sa durée de vie, la connexion peut être soumise à un grand nombre de cycles thermiques. L'homme du métier devra alors s'assurer que la connexion est capable de supporter un nombre donné de cycles correspondant à la durée de vie souhaitée. Il pourra réaliser des essais pour choisir le matériau du tuyau en conséquence. Par exemple, il pourra être amené à choisir matériau à faible coefficient de dilatation thermique et à faible taux de déformation rémanente à la compression.

Pour de très nombreuses applications, on préfère utiliser du caoutchouc vulcanisé. Dans certains cas, il pourra être souhaitable de réaliser l'opération de vulcanisation du caoutchouc du tuyau seulement après le montage, au moins partiel de la connexion (i.e. après la formation du ou des bourrelets formant le ou les joints).

## Revendications

1. Dispositif de connexion entre un tube (10, 110) et un tuyau souple (14, 114), le dispositif comprenant un embout (12, 112), disposé à une extrémité du tuyau et présentant des premiers moyens de verrouillage (26, 126) susceptibles de coopérer avec des deuxièmes moyens de verrouillage (30, 130) qui équipent le tube (10, 110) dans une situation de raccordement dans laquelle une première (10, 110) des deux pièces constituées par le tube et par l'embout est emmanchée dans la deuxième (12, 112) de ces deux pièces, le dispositif comprenant, en outre, un joint d'étanchéité (24, 124, 124') apte à étancher la liaison entre le tube et l'embout dans ladite situation de raccordement,
**caractérisé en ce que** l'embout comporte une première et une deuxième bague (16, 18 ; 116, 118) disposées l'une à la suite de l'autre sur une première (15A, 115A) des faces interne et externe du tuyau, un espace (20, 120, 120') dit "espace d'étanchéité" étant ménagé entre lesdites bagues, la deuxième bague étant plus proche de l'extrémité (14A, 114A) du tuyau que la première, en ce que l'embout comporte, en outre, un corps tubulaire (22, 122) qui est disposé sur la deuxième (15B, 115B) desdites faces interne et externe du tuyau et qui s'étend au moins dans la région de cette deuxième face correspondant à la zone qu'occupe l'espace d'étanchéité (20, 120, 120') sur la première face et en ce que le joint d'étanchéité est formé par un bourrelet (24, 124, 124') du tuyau qui se trouve dans l'espace d'étanchéité.

2. Dispositif selon la revendication 1, **caractérisé en ce que** les extrémités des bagues (16, 18, 116, 118, 150) situées de part et d'autre de l'espace d'étanchéité présentent des moyens (16A, 18A; 116A, 116B, 150A, 150B) pour éviter de blesser le tuyau (14, 114) de part et d'autre du bourrelet (24, 124, 124').

3. Dispositif selon la revendication 2, **caractérisé en ce que** les extrémités des bagues (16, 18, 116, 118, 150) situées de part et d'autre de l'espace d'étanchéité présentent des déformations formant des surfaces annulaires (16A, 18A; 116A, 118A, 150) qui s'étendent en creux par rapport au bourrelet (20, 120, 120').

4. Dispositif selon l'une quelconque des revendications 1 à 3, **caractérisé en ce qu'**il comporte, en outre, une bague intermédiaire (150), disposée entre la première et la deuxième bague (116, 118) et en ce qu'un premier et un deuxième espace d'étanchéité (120, 120') dans lesquels sont respectivement formés un premier et un deuxième bourrelet (124, 124') du tuyau (114) sont respectivement ménagés entre la première bague (116) et la bague intermédiaire (150) et entre ladite bague intermédiaire et la deuxième bague (118).

5. Dispositif selon l'une quelconque des revendications 1 à 3, **caractérisé en ce que** l'un des éléments constitués par la deuxième bague (18, 118) et par le corps tubulaire (22, 122) se prolonge (18B, 118B) au-delà de l'extrémité du tuyau et porte les premiers moyens de verrouillage (26, 126).

6. Procédé pour fabriquer un dispositif de connexion entre un tube (10, 110) et un tuyau souple (14, 114), dans lequel on dispose un embout (12, 112) à une extrémité du tuyau souple et on équipe ledit embout de premiers moyens de verrouillage (26, 126) susceptibles, dans une situation de raccordement dans laquelle une première (10, 110) des deux pièces constituées par le tube et par l'embout (12, 112) est emmanchée dans la deuxième de ces deux pièces, de coopérer avec des deuxièmes moyens de verrouillage (30, 130) qui équipent le tube, procédé dans lequel on prévoit un joint d'étanchéité (24, 124, 124') apte à étancher la liaison entre le tube et l'embout dans ladite situation de raccordement,
**caractérisé en ce que**, pour disposer l'embout (12, 112) à l'extrémité du tuyau (14, 114), on dispose une première et une deuxième bague (16, 18, 116, 118) sur une première (15A, 115A) des faces interne et externe du tuyau, en ce que l'on ménage un espace (20, 120, 120') dit "espace d'étanchéité" entre ces bagues, en ce que l'on dispose un corps tubulaire (22, 122) sur la deuxième (15B, 115B) des faces interne et externe du tuyau en plaçant ce corps de manière qu'il s'étende au moins dans la région de cette deuxième face qui correspond à la zone qu'occupe l'espace d'étanchéité sur la première face, et en ce que l'on dote l'embout du joint d'étanchéité en formant, dans le tuyau, un bourrelet (24, 124, 124') qui s'étend dans l'espace d'étanchéité.

7. Procédé selon la revendication 6, **caractérisé en ce que**, pour former le bourrelet, on diminue le diamètre de ceux (22, 122) des éléments constitués par les première et deuxième bagues et par le corps tubulaire qui se trouvent sur la face externe (15B, 115B) du tuyau.

8. Procédé selon la revendication 7, **caractérisé en ce que** la diminution du diamètre est obtenue en réalisant une étape de rétreint.

9. Procédé selon l'une quelconque des revendications 6 à 8, **caractérisé en ce que** pour former le bourrelet (24, 124, 124'), on augmente le diamètre de ceux (16, 18, 116, 118, 150) des éléments constitués par les première et deuxième bagues et par le corps tubulaire qui se trouvent sur la face interne (15A, 115A) du tuyau.

10. Procédé selon l'une quelconque des revendications 6 à 9, **caractérisé en ce que** l'on dote les extrémités des bagues (16, 18, 116, 150, 118) entre lesquelles est ménagé le bourrelet de moyens (16A, 18A, 116A, 118A, 150A, 150B) pour éviter de blesser le tuyau.

11. Procédé selon la revendication 10, **caractérisé en ce que** l'on forme, sur les extrémités des bagues destinées à se trouver de part et d'autre du bourrelet (24, 124, 124'), des surfaces annulaires (16A, 18A, 116A, 118A, 150) qui se trouvent en creux par rapport audit bourrelet.

12. Procédé selon l'une quelconque des revendications 6 à 11, **caractérisé en ce que** l'on dispose une bague intermédiaire (150) entre les première et deuxième bagues (116, 118), en ce que l'on ménage un premier et un deuxième espace d'étanchéité (120, 120') entre la première bague (116) et la bague intermédiaire (150) et, respectivement, entre ladite bague intermédiaire et la deuxième bague (118) et en ce que l'on forme dans le tuyau un premier et un deuxième bourrelet (124, 124') qui s'étendent respectivement dans le premier et dans le deuxième espace d'étanchéité.

13. Procédé selon l'une quelconque des revendications 6 à 12, **caractérisé en ce que** l'on laisse dépasser au moins l'un des éléments constitués par la deuxième bague (18, 118) et par le corps tubulaire (22, 122) au-delà de l'extrémité du tuyau (14, 114) pour former un prolongement (18B, 118B) et en ce que l'on place les premiers moyens de verrouillage (26, 126) sur ce prolongement.

## Patentansprüche

1. Verbindungsvorrichtung zwischen einem Rohr (10, 110) und einem Schlauch (14, 114), welche Vorrichtung ein an einem Ende des Schlauchs angeordnetes Ansatzstück (12, 112) mit ersten Verriegelungsmitteln (26, 126) aufweist, die mit zweiten Verriegelungsmitteln (30, 130), mit denen das Rohr (10, 110) ausgestattet ist, in einer Verbindungsposition zusammenwirken können, in der ein erstes Element (10, 110) der zwei durch das Rohr und das Ansatzstück gebildeten Elemente im zweiten (12, 112) dieser beiden Elemente eingesteckt ist, wobei die Vorrichtung weiters eine Dichtung (24, 124, 124') zur Abdichtung der Verbindung zwischen dem Rohr und dem Ansatzstück in der Verbindungsposition aufweist, **dadurch gekennzeichnet, dass** das Ansatzstück einen ersten und einen zweiten Ring (16, 18; 116, 118) aufweist, die aufeinanderfolgend auf einer ersten Seite (15A, 115A) von einer Innen- und einer Außenseite des Schlauchs angeordnet sind, wobei ein als "Dichtungsraum" bezeichneter Raum (20, 120, 120') zwischen den Ringen vorgesehen ist und der zweite Ring näher zum Ende (14A, 114A) des Schlauchs als der erste angeordnet ist, dass das Ansatzstück weiters einen rohrförmigen Körper (22, 122) aufweist, welcher auf der zweiten Seite (15B, 115B) der Innen- und Außenseiten des Schlauchs vorgesehen ist und sich zumindest in dem Bereich dieser zweiten Seite erstreckt, der jener Zone entspricht, die der Dichtungsraum (20, 120, 120') auf der ersten Seite einnimmt, und dass die Dichtung durch einen Wulst (24, 124, 124') des Schlauchs gebildet ist, der sich im Dichtungsraum befindet.

2. Vorrichtung nach Anspruch 1, **dadurch gekennzeichnet, dass** die zu beiden Seiten des Dichtungsraum befindlichen Enden der Ringe (16, 18, 116, 118, 150) zu beiden Seiten des Wulstes (24, 124, 124') Mittel (16A, 18A; 116A, 116B, 150A, 150B) zur Verhinderung einer Beschädigung des Schlauchs (14, 114) aufweisen.

3. Vorrichtung nach Anspruch 2, **dadurch gekennzeichnet, dass** die zu beiden Seiten des Dichtungsraums befindlichen Enden der Ringe (16, 18, 116, 118, 150) Verformungen aufweisen, welche Ringflächen (16A, 18A; 116A, 118A, 150) bilden, die in Bezug auf den Wulst (20, 120, 120') vertieft verlaufen.

4. Vorrichtung nach einem der Ansprüche 1 bis 3, **dadurch gekennzeichnet, dass** sie weiters einen zwischenring (150) aufweist, der zwischen dem ersten und dem zweiten Ring (116, 118) angeordnet ist, und dass ein erster und ein zweiter Dichtungsraum (120, 120'), in denen ein erster bzw. ein zweiter Wulst (124, 124') des Schlauchs (114) gebildet ist, zwischen dem ersten Ring (116) und dem Zwischenring (150) bzw. dem Zwischenring und dem zweiten Ring (118) vorgesehen sind.

5. Vorrichtung nach einem der Ansprüche 1 bis 3, **dadurch gekennzeichnet, dass** eines der durch den zweiten Ring (18, 118) und den rohrförmigen Körper (22, 122) gebildeten Elemente über das Ende des Schlauchs hinaus verlängert ist (18B, 118B) und die ersten Verriegelungsmittel (26, 126) trägt.

6. Verfahren zum Herstellen einer Verbindungsvorrichtung zwischen einem Rohr (10, 110) und einem Schlauch (14, 114), bei welchem ein Ansatzstück (12, 112) an einem Ende des Schlauchs angeordnet und das Ansatzstück mit ersten Verriegelungsmitteln (26, 126) ausgestattet wird, die in einer ersten Verbindungsposition, in der ein erstes Element (10, 110) der zwei durch das Rohr und das Ansatzstück (12, 112) gebildeten Elemente im zweiten dieser beiden Elemente eingesteckt ist, mit zweiten Verriegelungsmitteln (30, 130) zusammenwirken können, mit welchen das Rohr ausgestattet ist, bei welchem Verfahren eine Dichtung (24, 124, 124') zum Abdichten der Verbindung zwischen dem Rohr und dem Ansatzstück in der Verbindungsposition vorgesehen wird, **dadurch gekennzeichnet, dass** zum Anordnen des Ansatzstücks (12, 112) am Ende des Schlauchs (14, 114) ein erster Ring und ein zweiter Ring (16, 18; 116, 118) auf einer ersten Seite (15A, 115A) von einer Innen- und einer Außenseite des Schlauchs angeordnet werden, dass ein als "Dichtungsraum" bezeichneter Raum (10, 120, 120') zwischen diesen Ringen vorgesehen wird, dass ein rohrförmiger Körper (22, 122) auf der zweiten Seite (15B, 115B) der Innen- und Außenseite des Schlauchs vorgesehen wird, indem der Körper derart platziert wird, dass er sich zumindest in dem Bereich dieser zweiten Seite erstreckt, der jener Zone entspricht, die der Dichtungsraum auf der ersten Seite einnimmt, und dass das Ansatzstück mit der Dichtung versehen wird, indem im Schlauch ein Wulst (24, 124, 124') gebildet wird, der sich im Dichtungsraum erstreckt.

7. Verfahren nach Anspruch 6, **dadurch gekennzeichnet, dass** zum Ausbilden des Wulstes der Durchmesser jener Elemente (22, 122) verringert wird, die durch den ersten und den zweiten Ring sowie den auf der Außenseite (15B, 115B) des Schlauchs befindlichen rohrförmigen Körper gebildet sind.

8. Verfahren nach Anspruch 7, **dadurch gekennzeichnet, dass** die Verringerung des Durchmessers durch Ausführen eines Einziehschritts erzielt wird.

9. Verfahren nach einem der Ansprüche 6 bis 8, **dadurch gekennzeichnet, dass** zum Ausbilden des Wulstes (24, 124, 124') der Durchmesser jener Elemente (16, 18, 116, 118, 150) vergrößert wird, die durch den ersten und den zweiten Ring sowie den auf der Innenseite (15A, 115A) des Schlauchs befindlichen rohrförmigen Körper gebildet sind.

10. Verfahren nach einem der Ansprüche 6 bis 9, **dadurch gekennzeichnet, dass** die Enden der Ringe (16, 18, 116, 118, 150), zwischen denen der Wulst angeordnet ist, mit Mitteln (16A, 18A; 116A, 116B, 150A, 150B) zur Verhinderung einer Beschädigung des Schlauchs (14, 114) versehen werden.

11. Verfahren nach Anspruch 10, **dadurch gekennzeichnet, dass** an den zu beiden Seiten des Wulstes (24, 124, 124') befindlichen Enden der Ringe Ringflächen (16A, 18A; 116A, 118A, 150) ausgebildet werden, die in Bezug auf den Wulst vertieft liegen.

12. Verfahren nach einem der Ansprüche 6 bis 11, **dadurch gekennzeichnet, dass** ein Zwischenring (150) zwischen dem ersten und dem zweiten Ring (116, 118) angeordnet wird, dass ein erster und ein zweiter Dichtungsraum (120, 120') zwischen dem ersten Ring (116) und dem Zwischenring (15) bzw. dem Zwischenring und dem zweiten Ring (118) vorgesehen werden und dass im Schlauch ein erster und ein zweiter Wulst (124, 124') gebildet werden, die sich im ersten bzw. im zweiten Dichtungsraum erstrecken.

13. Verfahren nach einem der Ansprüche 6 bis 12, **dadurch gekennzeichnet, dass** mindestens eines der durch den zweiten Ring (18, 118) und den rohrförmigen Körper (22, 122) gebildeten Elemente zur Ausbildung einer Verlängerung (18B, 118B) über das Ende des Schlauchs (14, 114) vorragen gelassen wird und dass die ersten Verriegelungsmittel (26, 126) auf dieser Verlängerung angeordnet werden.

## Claims

1. A system for connecting a tube (10, 110) to a flexible hose (14, 114), the system comprising an endpiece (12, 112) disposed at one end of the hose and having first locking means (26, 126) suitable, when in a coupling situation in which a first (10, 110) of the two parts constituted by the tube and the endpiece is engaged in the second (12, 112) of said two parts, for co-operating with second locking means (30, 130) fitted to the tube (10, 110), the system further comprising a gasket (24, 124, 124') suitable for sealing the link between the tube and the endpiece in said coupling situation,
the system being **characterized in that** the endpiece has first and second rings (16, 18; 116, 118) disposed one after the other on a first of the inside and outside faces (15A, 115A) of the hose, a "sealing" gap (20, 120, 120') being organized between said rings, the second ring being closer to the end (14A, 114A) of the hose than the first, in that the endpiece further includes a tubular body (22, 122) which is disposed on the second of said inside and outside faces (15B, 115B) of the hose and which extends at least over the region of said second face corresponding to the zone occupied by the sealing gap (20, 120, 120' ) on the first face, and in that the gasket is formed by a swelling (24, 124, 124') of the hose which is to be found in the sealing gap.

2. A system according to claim 1, **characterized in that** the ends of the rings (16, 18, 116, 118, 150) situated on either side of the sealing gap have means (16A, 18A; 116A, 116B, 150A, 150B) for avoiding injuring the hose (14, 114) on either side of the swelling (24, 124, 124').

3. A system according to claim 2, **characterized in that** the ends of the rings (16, 18, 116, 118, 150) situated on either side of the sealing gap have deformations forming annular surfaces (16A, 18A; 116A, 118A, 150) which extend as recesses relative to the swelling (20, 120, 120').

4. A system according to any one of claims 1 to 3, **characterized in that** it further includes an intermediate ring (150) disposed between the first and second rings (116, 118), and in that first and second sealing gaps (120, 120') in which respective first and second swellings (124, 124') of the hose (114) are formed are respectively organized between the first ring (116) and the intermediate ring (150), and between said intermediate ring and the second ring (118).

5. A system according to any one of claims 1 to 3, **characterized in that** one of the elements constituted by the second ring (18, 118) and by the tubular body (22, 122) extends (18B, 118B) beyond the end of the hose and carries the first locking means (26, 126).

6. A method of manufacturing a system for connecting a tube (10, 110) to a flexible hose (14, 114), in which an endpiece (12, 112) is placed at one end of the flexile hose and said endpiece is fitted with locking means (26, 126) suitable, in a coupling situation in which a first of the two parts constituted by the tube (10, 110) and the endpiece (12, 112) is engaged in a second of said two parts, for co-operating with second locking means (30, 130) fitted to the tube, in which method a gasket (24, 124, 124') is provided suitable for sealing the link between the tube and the endpiece in said coupling situation,
the method being **characterized in that** to place the endpiece (12, 112) at the end of the hose (14, 114), first and second rings (16, 18, 116, 118) are placed on a first of the inside and outside faces (15A, 115A) of the hose, in that a "sealing" gap (20, 120, 120') is organized between said rings, in that a tubular body (22, 122) is disposed on the second of the inside and outside faces (15B, 115B) of the hose with the body being placed in such a manner as to extend at least over the region of said second face which corresponds to the zone occupied by the sealing gap on the first face, and in that the endpiece of the gasket is provided by forming a swelling (24, 124, 124') in the hose which extends in the sealing gap.

7. A method according to claim 6, **characterized in that** in order to form the swelling, those of the elements (22, 122) constituted by the first and second rings and by the tubular body that are located on the outside face (15B, 115B) of the hose are reduced in diameter.

8. A method according to claim 7, **characterized in that** the diameter is reduced by performing a swaging step.

9. A method according to any one of claims 6 to 8, **characterized in that** to form the swelling (24, 124, 124') the diameter of those of the elements (16, 18, 116, 118, 150) constituted by the first and second rings and by the tubular body which are to be found on the inside face (15A, 115A) of the hose is increased.

10. A method according to any one of claims 6 to 9, **characterized in that** the ends of the rings (16, 18, 116, 150, 118) between which the swelling is formed is provided with means (16A, 18A, 116A, 118A, 150A, 150B) for avoiding injuring the hose.

11. A method according to claim 10, **characterized in that**, on the ends of the rings that are to be found on either side of the swelling (24, 124, 124'), annular surfaces (16A, 18A, 116A, 118A, 150) are formed which are recessed relative to said swelling.

12. A method according to any one of claims 6 to 11, **characterized in that** an intermediate ring (150) is placed between the first and second rings (116, 118), in that first and second sealing gaps (120, 120') are formed respectively between the first ring (116) and the intermediate ring (150), and between said intermediate ring and the second ring (118), and in that first and second swellings (124, 124') are formed in the hose, the swellings extending respectively in the first and second sealing gaps.

13. A method according to any one of claims 6 to 12, **characterized in that** at least one of the elements constituted by the second ring (18, 118) and by the tubular body (22, 122) is allowed to project beyond the end of the hose (14, 114) to form an extension (18B, 118B), and in that the first locking means (26, 126) are placed in said extension.
